# EUROPEAN PATENT APPLICATION

(11) **EP 4 543 074 A1**
(43) Date of publication of application: **23.04.2025**
(21) Application number: 22946261.9
(22) Date of filing: 16.06.2022
(51) Int. Cl.: H04W 24/08

(54) **INFORMATION TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/099284
(87) International publication number: WO 2023/240572

(57) **Abstract**

Provided in the embodiments of the present disclosure are an information transmission method and apparatus, and a communication device and a storage medium. The method comprises: a user equipment (UE) sending an update request to a network side device, wherein the update request is at least used for indicating the applicability of a currently configured channel state information (CSI) reporting mode.

## Description

### TECHNICAL FIELD

The present disclosure relates to but is not limited to the communication technical field, and in particular to an information transmission method and apparatus, a communication device and a storage medium.

### BACKGROUND

In a cellular mobile communication system, User Equipment (UE) may determine Channel State Information (CSI) by measuring a reference signal such as Channel State Information Reference Signal (CSI-RS). The terminal reports the CSI to an access network device such as a base station. After receiving the CSI reported by the terminal, the access network device may schedule and allocate resources and manage beams according to the channel quality. The access network device may configure a CSI report configuration for the terminal through a Radio Resource Control (RRC) message, and the terminal reports the CSI according to configured CSI report configuration parameter(s).

### SUMMARY

Embodiments of the present disclosure provide an information transmission method and apparatus, a communication device and a storage medium.

According to a first aspect of the present disclosure, there is provided an information transmission method. The method is performed by User Equipment (UE), and the method includes:
sending an update request to a network side device, where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), and the UCI is transmitted through a Physical Uplink Control Channel (PUCCH) resource or a Physical Uplink Shared Channel (PUSCH) resource.

In an embodiment, sending the update request includes:
sending a Scheduling Request (SR) carrying the update request.

In an embodiment, sending the update request includes:
sending the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the method further includes:
based on a retention priority of information to be carried in UCI, determining information to be retained and carried in the UCI, where the retention priority is at least associated with the update request.

In an embodiment, the information to be carried includes an SR, where an SR carrying the update request and an SR not carrying the update request have a same retention priority; and/or
the information to be carried includes CSI, where CSI carrying the update request has a first retention priority, CSI carrying a Layer 1 Reference Signal Received Power (LI-RSRP) has a second retention priority, and CSI not carrying the update request or LI-PSRP has a third retention priority, where the first retention priority is higher than the second retention priority, and the second retention priority is higher than the third retention priority; and/or
the information to be carried includes CSI carrying the update information, where a retention priority of CSI transmitted at a first reporting occasion is higher than a retention priority of CSI transmitted at a second reporting occasion, the retention priority of the CSI transmitted at the second reporting occasion is higher than a retention priority of CSI transmitted at a third reporting occasion, the first reporting occasion is triggered by the network side device, the second reporting occasion is a periodic reporting occasion within an active period of time activated by the network side device, and the third reporting occasion is a non-active and/or deactivated periodic occasion, and where a retention priority of CSI transmitted through a PUSCH resource is higher than a retention priority of CSI transmitted through a PUCCH resource.

In an embodiment, the update request is further used to indicate at least one of:
a CSI compression model recommended by the UE;
a CSI report configuration recommended by the UE.

According to a second aspect of the present disclosure, there is provided an information transmission method. The method is performed by a network side device, and the method includes:
receiving an update request from User Equipment (UE), where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), the UCI is transmitted through a Physical Uplink Control Channel (PUCCH) resource or a Physical Uplink Shared Channel (PUSCH) resource.

In an embodiment, receiving the update request from the UE includes:
receiving a Scheduling Request (SR) carrying the update request.

In an embodiment, receiving the update request from the UE includes:
receiving the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the update request is further used to indicate at least one of:
a CSI compression model recommended by the UE;
a CSI report configuration recommended by the UE.

According to a third aspect of the present disclosure, there is provided an information transmission apparatus. The apparatus includes:
a first transceiving module configured to send an update request to a network side device, where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), and the UCI is transmitted through a Physical Uplink Control Channel (PUCCH) resource or a Physical Uplink Shared Channel (PUSCH) resource.

In an embodiment, the first transceiving module is specifically configured to:
send a Scheduling Request (SR) carrying the update request.

In an embodiment, the first transceiving module is specifically configured to:
send the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the apparatus further includes:
a processing module configured to, based on a retention priority of information to be carried in UCI, determine information to be retained and carried in the UCI, where the retention priority is at least associated with the update request.

In an embodiment, the information to be carried includes an SR, where an SR carrying the update request and an SR not carrying the update request have a same retention priority; and/or
the information to be carried includes CSI, where CSI carrying the update request has a first retention priority, CSI carrying a Layer 1 Reference Signal Received Power (LI-PSRP) has a second retention priority, and CSI not carrying the update request or LI-PSRP has a third retention priority, where the first retention priority is higher than the second retention priority, and the second retention priority is higher than the third retention priority; and/or
the information to be carried includes CSI carrying the update information, where a retention priority of CSI transmitted at a first reporting occasion is higher than a retention priority of CSI transmitted at a second reporting occasion, the retention priority of the CSI transmitted at the second reporting occasion is higher than a retention priority of CSI transmitted at a third reporting occasion, the first reporting occasion is triggered by the network side device, the second reporting occasion is a periodic reporting occasion within an active period of time activated by the network side device, and the third reporting occasion is a non-active and/or deactivated periodic occasion, and where a retention priority of CSI transmitted through a PUSCH resource is higher than a retention priority of CSI transmitted through a PUCCH resource.

In an embodiment, the update request is further used to indicate at least one of:
a CSI compression model recommended by UE;
a CSI report configuration recommended by the UE.

According to a fourth aspect of the present disclosure, there is provided an information transmission apparatus. The apparatus includes:
a second transceiving module configured to receive an update request from User Equipment (UE), where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), and the UCI is transmitted through a Physical Uplink Control Channel (PUCCH) resource or a Physical Uplink Shared Channel (PUSCH) resource.

In an embodiment, the second transceiving module is specifically configured to:
receive a Scheduling Request (SR) carrying the update request.

In an embodiment, the second transceiving module is specifically configured to:
receive the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the update request is further used to indicate at least one of:
a CSI compression model recommended by the UE;
a CSI report configuration recommended by the UE.

According to a fifth aspect of the present disclosure, there is provided a communication device. The communication device includes:
a processor;
a memory configured to store instructions executable by the processor;
where the processor is configured to implement the information transmission method according to the first aspect or the second aspect when running the executable instructions.

According to a sixth aspect of the present disclosure, there is provided a computer storage medium. The computer storage medium stores a computer executable program, and when the executable program is executed by a processor, the information transmission method according to the first aspect or the second aspect is implemented.

The technical solutions provided by the embodiments of the present disclosure can have the following beneficial effects:

In the embodiments of the present disclosure, the UE sends the update request to the network side device, where the update request is at least used to indicate the applicability of the currently configured CSI reporting mode.

In this way, the UE feeds back the applicability of the CSI reporting mode to the network side device through the update request, so that the network side device can determine the applicability of the CSI reporting mode. This reduces the situation where the applicability cannot be determined due to the base station unilaterally configuring a CSI reporting mode for the UE. Thus, the embodiments can improve the accuracy in configuring the CSI reporting mode and increase the CSI reporting efficiency.

It should be understood that the foregoing general description and the following detailed description are illustrative and explanatory only and are not restrictive of the embodiments of the present disclosure.

### BRIEF DESCRIPTION OF THE DRAWINGS

FIG. 1 is a schematic structural diagram of a wireless communication system.
FIG. 2 is a schematic diagram of a process of compressing CSI using an AI model according to an example embodiment.
FIG. 3 is a schematic flowchart of an information transmission method according to an example embodiment.
FIG. 4 is a schematic flowchart of an information transmission method according to an example embodiment.
FIG. 5 is a schematic flowchart of an information transmission method according to an example embodiment.
FIG. 6 is a block diagram of an information transmission apparatus according to an example embodiment.
FIG. 7 is a block diagram of an information transmission apparatus according to an example embodiment.
FIG. 8 is a block diagram of a UE according to an example embodiment.
FIG. 9 is a block diagram of a base station according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure as detailed in the appended claims.

The terms used in embodiments of the present disclosure are for the purpose of describing example embodiments only and are not intended to limit the embodiments of the present disclosure. As used in the embodiments of the present disclosure and the appended claims, the singular forms "a/an" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if" as used herein may be interpreted as "when" or "in a case where..." or "in response to determining... ".

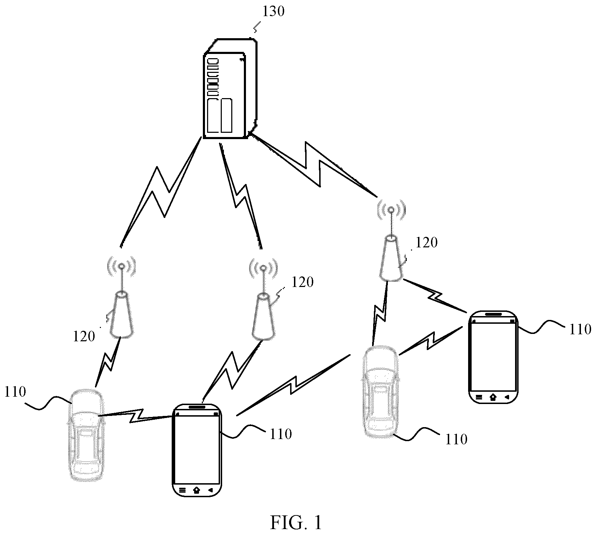

FIG. 1 shows a schematic structural diagram of a wireless communication system provided by an embodiment of the present disclosure. As shown in FIG. 1, the wireless communication system is a communication system based on cellular mobile communication technologies. The wireless communication system may include multiple pieces of user equipment 110 and multiple base stations 120.

User equipment 110 may be a device that provides voice and/or data connectivity to a user. The user equipment 110 may communicate with one or more core networks via a Radio Access Network (RAN). The user equipment 110 may be an Internet of Things user equipment, such as a sensor device, a mobile phone (or referred to as a "cellular" phone), and a computer with Internet of Things user equipment, for example, it can be a fixed, portable, pocket-sized, handheld, computer-built-in or vehicle-mounted device. For example, the user equipment 110 may be a station (STA), a subscriber unit, a subscriber station, a mobile station, a mobile, a remote station, an access point, remote user equipment (remote terminal), access user equipment (access terminal), a user terminal, a user agent, a user device, or user equipment. Alternatively, the user equipment 110 may be equipment of an unmanned aerial vehicle. Alternatively, the user equipment 110 may be a vehicle-mounted device, for example, it may be an on-board computer with a wireless communication function, or wireless user equipment connected to an external on-board computer. Alternatively, the user equipment 110 may be a roadside device, for example, it may be a streetlight, a signal light or other roadside device with a wireless communication function.

A base station 120 may be a network side device in a wireless communication system. The wireless communication system may be the 4th generation mobile communication (4G) system, also known as the Long Term Evolution (LTE) system; or, the wireless communication system may be a 5G system, also called new radio system or 5G NR system. Alternatively, the wireless communication system may be a next-generation system of the 5G system. The access network in the 5G system may be called New Generation-Radio Access Network (NG-RAN).

The base station 120 may be an evolved base station (eNB) used in the 4G system. Alternatively, the base station 120 may be a base station (gNB) using a centralized distributed architecture in the 5G system. When the base station 120 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Medium Access Control (MAC) layer; a distributed unit is provided with a physical (PHY) layer protocol stack. The embodiments of the present disclosure do not limit the specific implementation of the base station 120.

A wireless connection may be established between a base station 120 and user equipment 110 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of 5G.

In some embodiments, an End to End (E2E) connection may be established between user equipment 110, for example, vehicle to vehicle (V2V) communication, vehicle to Infrastructure (V2I) communication and vehicle to pedestrian (V2P) communication in vehicle to everything (V2X) and so on.

Here, the above-mentioned user equipment may be considered as a terminal device in the following embodiments.

In some embodiments, the above-mentioned wireless communication system may also include a network management device 130.

Multiple base stations 120 are connected to the network management device 130 respectively. The network management device 130 may be a core network device in a wireless communication system. For example, the network management device 130 may be a Mobility Management Entity (MME) in an Evolved Packet Core (EPC). Alternatively, the network management device may be other core network devices, such as Serving GateWay (SGW), Public Data Network GateWay (PGW), Policy and Charging Rules Function (PCRF) or Home Subscriber Server (HSS), etc. The embodiments of the present disclosure do not limit the implementation form of the network management device 130.

In order to facilitate understanding of those skilled in the art, embodiments of the present disclosure list multiple implementations to clearly illustrate the technical solutions of the embodiments of the present disclosure. Of course, those skilled in the art can understand that the multiple implementations provided by the embodiments of the present disclosure can be performed individually, or can be performed in combination with methods of other implementations of the embodiments of the present disclosure, or can be performed individually or in combination with some methods in other related technologies, and embodiments of the present disclosure do not limit this.

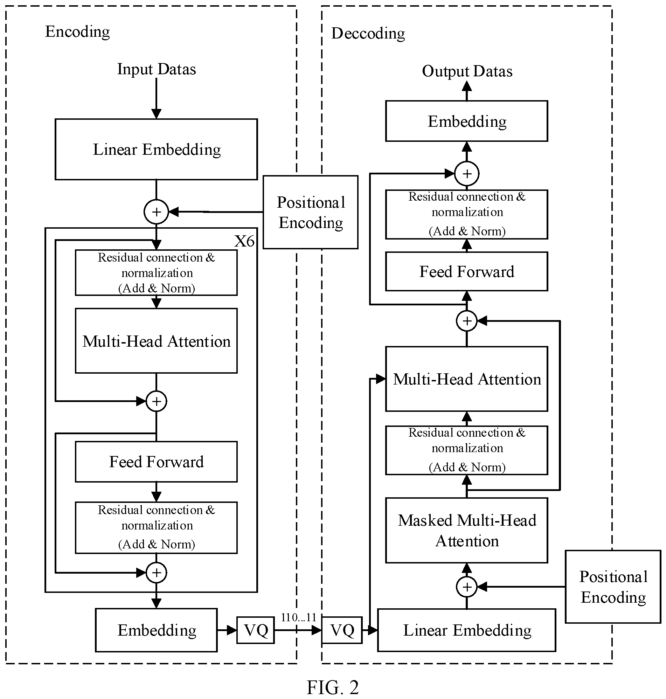

In cellular mobile communication systems, Artificial Intelligence (AI) technologies can be used to improve the performance of an air interface. For example, AI is applied to CSI reporting, AI is applied to beam management, and AI is applied to positioning. Taking AI applied to CSI reporting as an example, the AI technology can be used to compress a CSI information content, thereby reducing the CSI reporting overhead and improving the accuracy of channel estimation. As an example, as shown in FIG. 2, a two-sided AI structure may be used. The AI-based CSI compression is at the UE side. A UE measures channel information according to CSI-RS, and then compresses CSI information and reports the compressed CSI to a network side device. The AI-based decompression is at the network side device. The network side device uses a corresponding AI decompression model to restore the CSI, thereby reducing the signaling overhead of the reference signal and CSI reporting. In AI-based air interface enhancement, the performance of the AI model may be measured by final performance such as throughput or spectrum efficiency. Some intermediate result(s), such as a cosine similarity between a restored channel/feature vector and a target channel/feature vector, may also be used to measure the performance of the AI model. In addition to the cosine similarity, there are other measure parameters such as the square of the cosine similarity or mean square error to measure the performance of the AI model.

Using a suitable AI model is conducive to improving air interface performance. When the UE finds that the current AI model is not suitable, how to notify the base station to change the model and adopt a suitable AI model is an urgent problem to be solved.

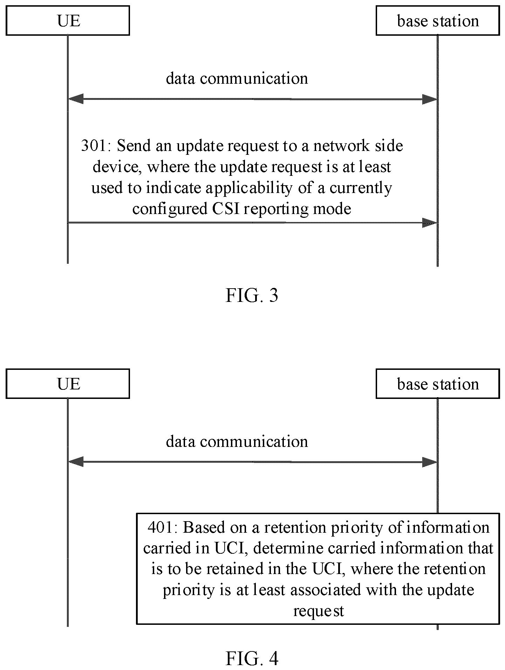

As shown in FIG. 3, an embodiment of the present disclosure provides an information transmission method. The method is performed by a UE and includes:

In step 301, an update request is sent to a network side device. The update request is at least used to indicate applicability of a currently configured CSI reporting mode.

In a possible implementation, the update request is used to request the network side device to update the CSI reporting mode of the UE. That is, step 301 may be as follows: sending an update request to the network side device, where the update request is used to request the network side device to update the CSI reporting mode of the UE.

In a possible alternative implementation, the update request indicates to the network side device that the currently configured CSI reporting mode is not applicable to the UE. That is, step 301 may be as follows: sending an update request to the network side device, where the update request is used to indicate to the network side device that the currently configured CSI reporting mode is not applicable to the UE.

In another possible alternative implementation, the update request may be used to indicate to the network side device that the currently configured CSI reporting mode is applicable to the UE. That is, step 301 may be as follows: sending an update request to the network side device, where the update request is used to indicate to the network side device that the currently configured CSI reporting mode is applicable to the UE.

Here, the network side device includes but is not limited to a base station.

The CSI reporting mode may include but is not limited to one of the following: an information content included in reported CSI; a processing mode for the information content included in the reported CSI; and a transmission resource used to report the CSI. Here, the CSI may be a CSI report.

The information content contained in CSI may include but is not limited to one of the following: Channel Quality Indicator (CQI), Precoding Matrix Indicator (PMI), SSB Resource Indicator (SSB RI), CSI-RS Resource Indicator (CRI), and Layer 1 Reference Signal Received Power (L1-RSRP).

In an embodiment, the CSI reporting mode includes at least one of the following:
a CSI compression model;
a CSI report configuration.

Here, the CSI compression model may be a machine learning model. For example, the CSI compression model may be a machine learning model obtained by using a deep learning algorithm such as a convolutional neural network or a recursive neural network. The CSI compression model may be used for, but not limited to: compressing the information content included in CSI. The UE may report the CSI compressed by the CSI compression model, thereby reducing signaling overhead.

In a possible implementation, the CSI compression model may be used to compress the PMI in the CSI. Since the PIM occupies more bits, compressing the PMI can reduce the amount of data of the CSI.

The CSI report configuration may be used to specify a CSI resource configuration associated with the CSI report, a configuration for the CSI report in the frequency domain (for example, a frequency band for the CSI report, whether the PMI/CQI reporting is wideband or subband), a behavior of the CSI report in the time domain (including periodic, semi-persistent, or aperiodic), and the CSI-related report quantity reported by the UE (including CQI, PMI, CRI, SSBRI, L1-RSRP, etc.).

The UE may determine the applicability of the current CSI reporting mode based on a capability of the UE, a load condition of the UE, status, etc.

For example, the UE may determine the applicability of the current CSI reporting mode based on a CSI compression model that can be supported or whether compressing the CSI using the CSI compression model is supported.

Here, the applicability of the CSI reporting mode may include but is not limited to at least one of the following: whether the CSI reporting mode is applicable to the UE; a degree of applicability of the CSI reporting mode, where the degree of applicability may be a degree of match between a CSI reporting mode expected by the UE and the current CSI reporting mode.

In a possible implementation, the base station determines whether to update the CSI reporting mode based on the update request.

After receiving the update request, the base station may determine the applicability of the CSI reporting mode to the UE, and then determine whether the CSI reporting mode of the UE needs to be adjusted according to actual condition(s).

In an embodiment, the update request is used to indicate at least one of the following that:
the currently configured CSI reporting mode is not applicable to the UE;
the currently configured CSI reporting mode is applicable to the UE.

In a possible implementation, the UE may explicitly indicate whether the CSI reporting mode is applicable to the UE by sending the update request.

Here, the applicability of the CSI reporting mode may indicate whether the UE requests updating of the CSI reporting mode. For example, when the update request indicates that the currently configured CSI reporting mode is not applicable to the UE, it indicates that the UE requests updating of the CSI reporting mode. When the update request indicates that the currently configured CSI reporting mode is applicable to the UE, it indicates that the UE does not request updating of the CSI reporting mode. The base station may determine whether to update the CSI reporting mode based on the update request.

In a possible implementation, the UE may explicitly indicate that the CSI reporting mode is applicable to the UE by sending the update request, and when the UE does not send the update request at a predetermined occasion, it implicitly indicates that the CSI reporting mode is not applicable to the UE, or it implicitly indicates that the UE requests to update the CSI reporting mode. Alternatively, the UE may explicitly indicate that the CSI reporting mode is not applicable to the UE by sending the update request, and when the UE does not send the update request at a predetermined occasion, it implicitly indicates that the CSI reporting mode is applicable to the UE; correspondingly, when the UE sends the update request at a predetermined occasion, it indicates that the CSI reporting mode is not applicable to the UE or indicates that the UE requests to update the CSI reporting mode.

In a possible implementation, the update request may indicate whether the current CSI compression model is applicable to the UE.

The base station may be configured with multiple CSI compression models, and may configure one or more of the CSI compression models for a UE for current CSI compression. The UE may indicate, through an update request, whether the currently configured one or more CSI compression models are applicable to the UE.

In a possible implementation, the base station determines whether to update the CSI compression model based on the update request.

In this way, the base station can determine whether the current CSI compression model is applicable to the UE, and then select a CSI compression model applicable to the UE. This improves the matching of the CSI compression model and reduces the situation of decreased spectrum efficiency or low AI compression accuracy due to the CSI compression model being not applicable to the UE.

In a possible implementation, the update request may indicate whether the UE is applicable to the CSI compression model. That is, the update request may indicate at least whether the CSI compression model is used to compress the CSI. For example, if the UE does not support compressing PMI in the CSI using the CSI compression model, the UE may use original data of the PMI.

In an embodiment, the update request is further used to indicate at least one of the following:
a CSI compression model recommended by the UE;
a CSI report configuration recommended by the UE.

In a possible implementation, the update request may occupy one bit, with "1" indicating that the CSI reporting mode is applicable to the UE and "0" indicating that the CSI reporting mode is not applicable to the UE or indicating that the UE requests to update the CSI reporting mode, or, with "0" indicating that the CSI reporting mode is applicable to the UE and "1" indicating that the CSI reporting mode is not applicable to the UE or indicating that the UE requests to update the CSI reporting mode.

In a possible implementation, the update request may occupy multiple bits to indicate the CSI compression model and/or CSI report configuration recommended by the UE.

As an example, identity information (such as an index) may be set for a CSI compression model and/or a CSI report configuration, and the update request may be indicates the identity information of a recommended CSI compression model and/or identity information of a CSI report configuration.

In this way, the base station can determine whether the CSI is compressed using the CSI compression model. This reduces inconsistent understanding between the base station and the UE regarding whether the CSI is compressed using the CSI compression model. This reduces the situation where the base station and the UE use non-corresponding methods for CSI reporting, resulting errors in CSI transmission and decoding.

In a possible implementation, the update request may indicate whether the current CSI report configuration is applicable to the UE.

The base station may be configured with multiple CSI report configurations, and may configure a CSI report configuration for a UE for current CSI reporting. The UE may indicate, through an update request, whether the currently configured CSI report configuration is applicable to the UE.

The base station may determine whether the current CSI report configuration is applicable to the UE and then select, for the UE, a CSI report configuration applicable to the UE, thereby improving the success rate of CSI transmission.

In this way, the UE feeds back the applicability of the CSI reporting mode to the base station through the update request, so that the base station can determine the applicability of the CSI reporting mode. This reduces the situation where the applicability cannot be determined due to the base station unilaterally configuring the CSI reporting mode for the UE. Thus, the embodiments can improve the accuracy in configuring the CSI reporting mode and increase the CSI reporting efficiency.

In an embodiment, the update request is carried in Uplink Control Information (UCI), where the UCI is transmitted through a Physical Uplink Control Channel (PUCCH) resource or a Physical Uplink Shared Channel (PUSCH) resource.

When the PUCCH resource overlaps with the PUSCH resource in the time domain, the UCI may also be transmitted through the PUSCH resource.

In a possible implementation, the update request may be transmitted individually.

For example, for individual transmission, the update request may be carried in PUCCH information with PUCCH format 0, or may be carried in PUCCH information with PUCCH format 1. The PUCCH format 0 or PUCCH format 1 may occupy up to two bits, and thus the update request which is transmitted individually may occupy 1 or 2 bits.

In a possible implementation, the update request may be transmitted together with other information than the update information in the UCI.

In a possible implementation, the update request may occupy reserved bit(s) in the UCI, or the update request may adopt bit(s) newly added in the UCI.

For example, the UCI may include information such as HARQ, and the update request may occupy reserved bit(s) in the UCI or adopt newly added bit(s), and the update request and the HARQ may be carried in the UCI and sent to the base station. For example, the update request may use PUCCH Format 2, or use PUCCH format 3.

In an embodiment, sending the update request includes:
sending a Scheduling Request (SR) which carries the update request.

In a possible implementation, the update request may be multiplexed with an existing SR and sent to the base station.

In a possible implementation, a new SR may be added to carry the update request. The new SR may be bounded with a SR resource ID.

When a trigger condition for the SR is met, the Scheduling Request (SR) carrying the update request is sent.

As an example, when the UE determines that the CSI reporting mode needs to be switched (i.e., the current CSI reporting mode is not applicable to the UE), the UE may send the SR carrying the update request. The update request may only be used to indicate that the CSI reporting mode is not applicable to the UE. If the current CSI reporting mode is applicable to the UE, the UE may not send the SR carrying the update request at the time of the SR mode, making an implicit indication to the base station.

For example, if the SR includes only the update request or the UCI includes only an SR, and the number of bits occupied by the SR is less than or equal to 2, the PUCCH format 0 or PUCCH format 1 may be used for transmission.

In a possible implementation, the SR carrying the update request is multiplexed with information other than the SR carried in the UCI and sent on the same uplink resource.

For example, when the update request needs to be multiplexed with other information in the UCI and then sent, the PUCCH format 2 or PUCCH format 3 may be used, or may be sent in PUSCH. For example, in the current UCI, HARQ-ACK information and three types of SR need to be sent together. The three types of SR are scheduling request, Link Recovery Request (LRR) and an update request (the update request indicates whether the CSI reporting mode is applicable to the UE, i.e., whether the CSI reporting mode needs to be switched). In this case, two bits are required to jointly encode multiple SRs to indicate states of the SRs, and each SR (SR resource ID) is indicated in ascending order. For example, a "00" state may be used to indicate that all three SRs are in a negative state, that is, there is no uplink scheduling request, there is no link recovery request, and there is no CSI reporting mode switching request. Similarly, a "01" state may be used to indicate that there is an uplink scheduling request, there is no link recovery request, and there is no CSI reporting mode switching request; a "11" state may be used to indicate that there is no uplink scheduling request, there is no link recovery request, and there is a CSI switching request. In UCI, the two-bit information may be appended after the HARQ-ACK information and sent to the base station together.

In an embodiment, sending the update request includes:
sending the update request at a reporting occasion.

Here, the reporting occasion may be specified in a communication protocol, may be negotiated between the base station and the UE, or may be triggered by the base station.

In a possible implementation, during a reporting occasion, regardless of whether the CSI reporting mode is applicable, the UE can send an update request, that is, regardless of whether the UE needs to switch the CSI reporting mode, the UE sends the update request to indicate the applicability of the CSI reporting mode.

As an example, the UE reports the update request at a reporting occasion. Taking the update request occupying 1 bit as an example, when the UE needs to update the CSI reporting mode, the UE reports "1", and when the UE does not need to update the CSI reporting mode, the UE reports "0".

In an embodiment, the reporting occasion is a periodic reporting occasion; or
the reporting occasion is triggered by the base station; or
the reporting occasion is a periodic reporting occasion within an active period of time activated by the base station.

Here, the reporting occasion may be periodic, or may be semi-statically configured, or may be dynamically configured (i.e., the reporting occasion is aperiodic). The periodic reporting occasion refers to that, after a configuration associated with the update request is completed, the reporting occasion occurs periodically, and the periodic reporting period cannot be deactivated and is always in an active state. For example, the reporting occasion may be determined according to a communication protocol, and the period of the reporting occasion may be obtained through the communication protocol.

The semi-static reporting occasion may be a periodic reporting occasion within an active period of time activated by a network side device, and the base station may deactivate the active period of time to control the reporting occasion. For example, the reporting period may be semi-statically configured through RRC signaling or other signaling.

The aperiodic reporting occasion may be a reporting occasion triggered by a network side device or a UE. That is, the reporting occasion is dynamically triggered, and the UE sends the update request. For example, the reporting may be dynamically configured through DCI signaling or other signaling, and the UE reports the update request only when it receives the signaling; or, the reporting is triggered by the UE.

In an embodiment, the update request includes: a report quantity in a CSI report configuration.

Here, the update request may be carried in CSI as a CSI report quantity.

In a possible implementation, the update request may be jointly encoded with other report quantity(quantities) in the CSI.

In a possible implementation, the update request may be a new type of report quantity in the CSI.

In a possible implementation, the update request may occupy reserved bit(s) in the CSI, or new bit(s) may be added in the CSI to carry the update request.

For example, a new report quantity may be defined. For example, the base station configures a CSI report configuration, where an included report quantity is the update requests (CSI change request), and its time property is aperiodic reporting. When the base station triggers aperiodic reporting bound to the CSI report configuration index, the UE reports a value corresponding to the update request.

The CSI carrying the update request report quantity may be sent at the above reporting occasion.

As shown in FIG. 4, an embodiment of the present disclosure provides an information transmission method. The method is performed by a UE and includes:

In step 401, information to be retained and carried in the UCI is determined based on a retention priority of information to be carried in UCI, where the retention priority is at least associated with the update request.

Step 401 may be implemented alone or in combination with step 301.

Since there may be a lack of a PUCCH resource for carrying the UCI, in this case, a part of information to be carried in the UCI needs to be discarded. Here, the retention priority of the information to be carried may be determined based on whether the information to be carried carries the update request.

In an embodiment, if the UCI does not carry the update request, the retention priority of the information to be carried in the UCI may be determined based on the type. The retention priority of information to be carried of the same type may be divided based on the specific content of the information to be carried. For example, in UCI, the retention priority of HARQ is higher than the retention priority of SR, and the retention priority of SR is higher than the retention priority of CSI. In CSI, the retention priority of CSI including RSRP is higher than the retention priority of CSI not including RSRP, and the wideband CQI is higher than the subband CQI.

In an embodiment, if the UCI carries the update request, the retention priority of the information to be carried may be determined based at least on whether the information to be carried carries the update request. For example, if the UCI carries SR, HARQ, and CSI, the retention priority of the CSI may be determined based on whether the CSI carries the update request. For example, if the CSI carries the update request, the retention priority of the CSI is higher than the retention priority of the SR and may be retained. If the CSI does not carry the update request, the retention priority of the CSI is lower than the retention priority of the SR.

In an embodiment, if the update request is carried in the CSI, the information to be carried in the UCI includes: SR, HARQ, and CSI carrying the update request, and the information to be carried with a lower retention priority may be determined according to an order of retention priority. The retention priority may be in the order from high to low as follows: HARQ, SR, CSI carrying the update request, and CSI not carrying the update request.

In an embodiment, if the update request is carried in the CSI, the information to be carried in the UCI includes: SR, HARQ, CSI carrying the update request, and the information to be carried with a lower retention priority may be discarded according to an order of retention priority. The retention priority may be in the order from high to low as follows: HARQ, CSI carrying the update request, SR, CSI not carrying the update request.

In an embodiment, the information to be carried includes an SR, where an SR carrying the update request and an SR not carrying the update request have the same retention priority; and/or
the information to be carried includes CSI, where CSI carrying the update request has a first retention priority, CSI carrying Layer 1 Reference Signal Received Power (LI-PSRP) has a second retention priority, and CSI not carrying the update request or the LI-PSRP has a third retention priority, where the first retention priority is higher than the second retention priority, and the second retention priority is higher than the third retention priority; and/or
the information to be carried includes: CSI carrying the update information, where the retention priority of CSI transmitted at a first reporting occasion is higher than the retention priority of CSI transmitted at a second reporting occasion, where the retention priority of the CSI transmitted at the second reporting occasion is higher than the retention priority of CSI transmitted at a third reporting occasion, where the first reporting occasion is triggered by a base station, the second reporting occasion is a periodic reporting occasion within an active period of time activated by the base station, and the third reporting occasion is a non-active and/or deactivated periodic occasion, where the retention priority of CSI transmitted through a PUSCH resources is higher than the retention priority of CSI transmitted through a PUCCH resource.

Here, if the update request is carried in an SR, that is, the update request is bound to a SR resource ID, the SR has the same retention priority as other SR(s) that does(do) not carry the update request.

If the update request is carried in CSI as a CSI report quantity, the retention priority of the CSI may be determined based on the CSI report quantity: the retention priority of the CSI carrying the update request is greater than the retention priority of CSI carrying the LI-PSRP, and the retention priority of the CSI carrying the LI-PSRP is greater than the retention priority of CSI carrying other report quantity(quantities).

If multiple pieces of CSI all carry the update request (e.g., all carry the report quantity of update request), the retention priority level of CSI may be determined based on the reporting occasion of CSI and the resource(s) for carrying the CSI: the retention priority level of CSI at an aperiodic reporting occasion (i.e., a reporting occasion triggered by the base station) is greater than the retention priority level of CSI at semi-static reporting occasion (i.e., a periodic reporting occasion during an active period of time activated by the base station); the retention priority level of the CSI at the semi-static reporting occasion (i.e., the periodic reporting occasion during the active period of time activated by the base station) is greater than the retention priority of CSI at a periodic reporting occasion. If the retention priorities of the CSI reporting occasions are the same, the retention priority of CSI transmitted through a PUSCH resource is higher than the retention priority of CSI transmitted through a PUCCH resource.

As an example, the retention priority of aperiodic CSI carried by PUSCH > the retention priority of semi-static CSI carried by PUSCH > the retention priority of semi-static CSI carried by PUCCH > the retention priority of periodic CSI carried by PUCCH.

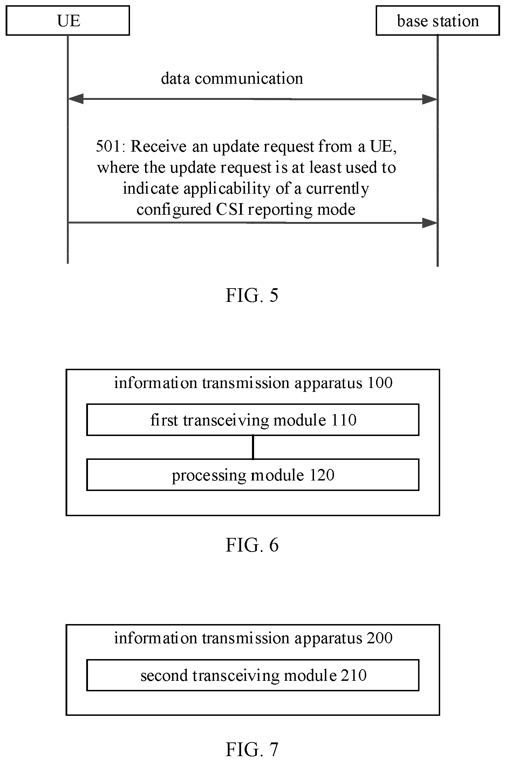

As shown in FIG. 5, an embodiment of the present disclosure provides an information transmission method. The method is performed by a network side device and includes:

In step 501, an update request is received from a UE. The update request is at least used to indicate applicability of a currently configured CSI reporting mode.

In a possible implementation, the update request is used to request the network side device to update the CSI reporting mode of the UE. That is, step 301 may be as follows: sending the update request to the network side device, where the update request is used to request the network side device to update the CSI reporting mode of the UE.

In a possible alternative implementation, the update request indicates to the network side device that the currently configured CSI reporting mode is not applicable to the UE. That is, step 301 may be as follows: sending the update request to the network side device, where the update request is used to indicate to the network side device that the currently configured CSI reporting mode is not applicable to the UE.

In another possible alternative implementation, the update request may be used to indicate to the network side device that the currently configured CSI reporting mode is applicable to the UE. That is, step 301 may be as follows: sending the update request to the network side device, where the update request is used to indicate to the network side device that the currently configured CSI reporting mode is applicable to the UE.

Here, the network side device includes but is not limited to a base station.

The CSI reporting mode may include but is not limited to one of the following: an information content included in the reported CSI; a processing mode for the information content included in the reported CSI; and a transmission resource used to report the CSI. Here, the CSI may be a CSI report.

The information content contained in CSI may include but is not limited to one of the following: Channel Quality Indicator (CQI), Precoding Matrix Indicator (PMI), SSB Resource Indicator (SSB RI), CSI-RS Resource Indicator (CRI), Layer 1 Reference Signal Received Power (L1-RSRP).

In an embodiment, the CSI reporting mode includes at least one of the following:
a CSI compression model;
a CSI report configuration.

Here, the CSI compression model may be a machine learning model. For example, the CSI compression model may be a machine learning model obtained by using a deep learning algorithm such as a convolutional neural network or a recursive neural network. The CSI compression model may be used for, but not limited to: compressing the information content included in CSI. The UE may report the CSI compressed by the CSI compression model, thereby reducing signaling overhead.

In a possible implementation, the CSI compression model may be used to compress the PMI in the CSI. Since the PIM occupies more bits, compressing the PMI can reduce the amount of data of the CSI.

The CSI report configuration may be used to specify a CSI resource configuration associated with the CSI report, a configuration for the CSI report in the frequency domain (for example, a frequency band for the CSI report, whether the PMI/CQI report is wideband or subband), a behavior of the CSI report in the time domain (including periodic, semi- persistent, and aperiodic), and the CSI-related report quantity reported by the UE (including CQI, PMI, CRI, SSBRI, L1-RSRP, etc.).

The UE may determine the applicability of the current CSI reporting mode based on a capability of the UE, a load condition of the UE, status, etc.

For example, the UE may determine the applicability of the current CSI reporting mode based on a CSI compression model that can be supported or whether compressing the CSI using the CSI compression model is supported.

Here, the applicability of the CSI reporting mode may include but is not limited to at least one of the following: whether the CSI reporting mode is applicable to the UE; a degree of applicability of the CSI reporting mode, where the degree of applicability may be a degree of match between a CSI reporting mode expected by the UE and the current CSI reporting mode.

In a possible implementation, the network side device determines whether to update the CSI reporting mode based on the update request.

After receiving the update request, the network side device can determine the applicability of the CSI reporting mode to the UE, and then determine whether the CSI reporting mode of the UE needs to be adjusted according to the actual situation(s).

In an embodiment, the update request is used to indicate at least one of the following that:
the currently configured CSI reporting mode is not applicable to the UE;
the currently configured CSI reporting mode is applicable to the UE.

In a possible implementation, the UE may explicitly indicate whether the CSI reporting mode is applicable to the UE by sending the update request.

Here, the applicability of the CSI reporting mode may indicate whether the UE requests updating of the CSI reporting mode. For example, the update request indicates that the currently configured CSI reporting mode is not applicable to the UE, that is, indicates that the UE requests updating of the CSI reporting mode. The update request indicates that the currently configured CSI reporting mode is applicable to the UE, that is, indicates that the UE does not request updating of the CSI reporting mode. The network side device may determine whether to update the CSI reporting mode based on the update request.

In a possible implementation, the UE may explicitly indicate that the CSI reporting mode is applicable to the UE by sending the update request, and when the UE does not send the update request at a predetermined occasion, it implicitly indicates that the CSI reporting mode is not applicable to the UE, or it implicitly indicates that the UE requests to update the CSI reporting mode. Alternatively, the UE may explicitly indicate that the CSI reporting mode is not applicable to the UE by sending the update request, and when the UE does not send the update request at a predetermined occasion, it implicitly indicates that the CSI reporting mode is applicable to the UE; correspondingly, when the UE sends the update request at the predetermined occasion, it indicates that the CSI reporting mode is not applicable to the UE or indicates that the UE requests to update the CSI reporting mode.

In a possible implementation, the update request may indicate whether the current CSI compression model is applicable to the UE.

The network side device may be configured with multiple CSI compression models, and may configure one or more of the CSI compression models for a UE for current CSI compression. The UE may indicate, through the update request, whether the one or more currently configured CSI compression models are applicable to the UE.

In a possible implementation, the network side device determines whether to update the CSI compression model based on the update request.

In this way, the network side device can determine whether the current CSI compression model is suitable for the UE, and then select a CSI compression model suitable for the UE. This improves the matching of the CSI compression model and reduces the situation of decreased spectrum efficiency or low AI compression accuracy due to the CSI compression model being not suitable for the UE.

In a possible implementation, the update request may indicate whether the UE is applicable to the CSI compression model. That is, the update request may indicate at least whether the CSI is compressed using the CSI compression model. For example, if the UE does not support compressing PMI in the CSI using the CSI compression model, the UE may use the original data of the PMI.

In an embodiment, the update request is further used to indicate at least one of the following:
a CSI compression model recommended by the UE;
a CSI report configuration recommended by the UE.

In a possible implementation, the update request may occupy one bit, with "1" indicating that the CSI reporting mode is applicable to the UE and "0" indicating that the CSI reporting mode is not applicable to the UE or indicating that the UE requests to update the CSI reporting mode, or, with "0" indicating that the CSI reporting mode is applicable to the UE and "1" indicating that the CSI reporting mode is not applicable to the UE or indicating that the UE requests to update the CSI reporting mode.

In a possible implementation, the update request may occupy multiple bits to indicate the CSI compression model and/or the CSI report configuration recommended by the UE.

As an example, identity information (such as an index) may be set for a CSI compression model and/or a CSI report configuration, and the update request may indicate identity information of a recommended CSI compression model and/or identity information of a CSI report configuration.

In this way, the network side device can determine whether the CSI is compressed using the CSI compression model. This reduces the inconsistent understanding between the network side device and the UE regarding whether the CSI is compressed using the CSI compression model. This reduces the situation where the network side device and the UE use non-corresponding methods for CSI reporting, resulting in errors in CSI transmission and decoding.

In a possible implementation, the update request may indicate whether the current CSI report configuration is applicable to the UE.

The network side device may be configured with multiple CSI report configurations, and may configure a CSI report configuration for a UE for current CSI reporting. The UE may indicate, through an update request, whether the currently configured CSI report configuration is applicable to the UE.

The network side device can determine whether the current CSI report configuration is applicable to the UE, and then select, for the UE, a CSI report configuration applicable to the UE, thereby improving the success rate of CSI transmission.

In this way, the UE feeds back the applicability of the CSI reporting mode to the network side device through an update request, so that the network side device can determine the applicability of the CSI reporting mode. This reduces the situation where the applicability cannot be determined due to the network side device unilaterally configuring the CSI reporting mode for the UE. Thus, the embodiments can improve the accuracy in configuring the CSI reporting mode and increase the CSI reporting efficiency.

In an embodiment, the update request is carried in Uplink Control Information (UCI), where the UCI is transmitted through a Physical Uplink Control Channel (PUCCH) resource or a Physical Uplink Shared Channel (PUSCH) resource.

When the PUCCH resource overlaps with the PUSCH resource in the time domain, the UCI may also be transmitted through the PUSCH resource.

In a possible implementation, the update request may be transmitted individually.

For example, for individual transmission, the update request may be carried in PUCCH information with PUCCH format 0, or may be carried in PUCCH information with PUCCH format 1. The PUCCH format 0 or PUCCH format 1 may occupy up to two bits, and thus the update request which is transmitted individually may occupy 1 or 2 bits.

In a possible implementation, the update request may be transmitted together with other information besides the update information in the UCI.

In a possible implementation, the update request may occupy reserved bit(s) in the UCI, or adopt bit(s) newly added in the UCI.

For example, UCI may include HARQ information, and the update request may occupy the reserved bit(s) in UCI or adopt the newly added bit(s), and the update request and the HARQ may be carried in UCI and sent to the network side device. For example, the update request may use PUCCH Format 2 or PUCCH format 3.

In an embodiment, receiving the update request from the UE includes:
receiving a Scheduling Request carrying the update request.

In a possible implementation, the update request may be multiplexed with an existing SR and sent to the network side device.

In a possible implementation, a new SR may be added to carry the update request. The new SR may be bounded with a SR resource ID.

When a trigger condition for the SR is met, the Scheduling Request (SR) carrying the update request is sent.

For example, when the UE determines that the CSI reporting mode needs to be switched (i.e., the current CSI reporting mode is not applicable to the UE), the UE may send an SR carrying an update request. The update request may only be used to indicate that the CSI reporting mode is not applicable to the UE. If the current CSI reporting mode is applicable to the UE, the UE may not send the SR carrying the update request at the time of the SR mode, making an implicit indication to the network side device.

For example, if the SR includes only the update request or the UCI includes only an SR, and the number of bits occupied by the SR is less than or equal to 2, the PUCCH format 0 or PUCCH format 1 may be used for transmission.

In a possible implementation, the SR carrying the update request is multiplexed with information other than the SR carried in the UCI and sent on the same uplink resource.

For example, when the update request needs to be multiplexed with other information in the UCI and then sent, the PUCCH format 2 or PUCCH format 3 may be used, or may be sent in PUSCH. For example, in the current UCI, HARQ-ACK information and three types of SR need to be sent together. The three types of SR are scheduling request, Link Recovery Request (LRR) and an update request (the update request indicates whether the CSI reporting mode is applicable to the UE, i.e., whether the CSI reporting mode needs to be switched). In this case, two bits are required to jointly encode multiple SRs to indicate states of the SRs, and each SR (SR resource ID) is indicated in ascending order. For example, a "00" state may be used to indicate that all three SRs are in a negative state, that is, there is no uplink scheduling request, there is no link recovery request, and there is no CSI reporting mode switching request. Similarly, a "01" state may be used to indicate that there is an uplink scheduling request, there is no link recovery request, and there is no CSI reporting mode switching request; a "11" state may be used to indicate that there is no uplink scheduling request, there is no link recovery request, and there is a CSI switching request. In UCI, the two-bit information may be appended after the HARQ-ACK information and sent to the base station together.

In an embodiment, receiving the update request from the UE includes:
receiving the update request at a reporting occasion.

Here, the reporting occasion may be specified by a communication protocol, may be negotiated between the network side device and the UE, or may be triggered by the network side device.

In a possible implementation, during a reporting occasion, regardless of whether the CSI reporting mode is applicable, the UE may send an update request, that is, regardless of whether the UE needs to switch the CSI reporting mode, the UE sends the update request to indicate the applicability of the CSI reporting mode.

As an example, the UE reports the update request at the reporting occasion. Taking the update request occupying 1 bit as an example, when the UE needs to update the CSI reporting mode, it reports "1", and when the UE does not need to update the CSI reporting mode, it reports "0".

In an embodiment, the reporting occasion is a periodic reporting occasion; or
the reporting occasion is triggered by the network side device; or
the reporting occasion is a periodic reporting occasion within an active period of time activated by the network side device.

Here, the reporting occasion may be periodic, or may be semi-static, or may be aperiodic.

The periodic reporting occasion refers to that, after a configuration associated with the update request is completed, the reporting occasion occurs periodically, and the periodic reporting period cannot be deactivated and is always in an active state. For example, the reporting occasion may be determined according to a communication protocol, and its period may be obtained through the communication protocol.

The semi-static reporting occasion may be a periodic reporting occasion within an active period of time activated by the network side device. The network side device may deactivate the active period of time to control the reporting occasion. For example, the reporting period may be semi-statically configured through RRC signaling or other signaling.

The aperiodic reporting occasion may be a reporting occasion triggered by a network side device or UE. That is, the reporting occasion is dynamically triggered, and the UE sends the update request. For example, the reporting may be dynamically configured through DCI signaling or other signaling, and the UE reports the update request only when it receives the signaling, or, the reporting is triggered by the UE.

In an embodiment, the update request includes: a report quantity in a CSI report configuration.

Here, the update request may be carried in CSI as a CSI report quantity.

In a possible implementation, the update request may be jointly encoded with other report quantity(quantities) in the CSI.

In a possible implementation, the update request may be a new type of report quantity in the CSI.

In a possible implementation, the update request may occupy reserved bit(s) in the CSI, or new bit(s) may be added in the CSI to carry the update request.

For example, a new report quantity may be defined. For example, the network side device configures a CSI report configuration, where an included report quantity is the update request (CSI change request), and the time property of the update request is aperiodic reporting. When the network side device triggers aperiodic reporting bound to the CSI report configuration index, the UE reports a value corresponding to the update request.

The CSI carrying the update request report quantity may be sent at the above reporting occasion.

In an embodiment, information to be retained and carried in the UCI is determined by the UE based on a retention priority of information to be carried in the UCI, where the retention priority is at least associated with the update request.

Since there may be a lack of a PUCCH resource for carrying the UCI, in this case, a part of information carried in the UCI needs to be discarded. Here, the retention priority of the information to be carried may be determined based on whether the information to be carried carries the update request.

In an embodiment, if the UCI does not carry the update request, the retention priority of the information to be carried in the UCI may be determined based on the type. The retention priority of information to be carried of the same type may be divided based on the specific content of the information to be carried. For example, in UCI, the retention priority of HARQ is higher than the retention priority of SR, and the retention priority of SR is higher than the retention priority of CSI. In the CSI, the retention priority of CSI including RSRP is higher than the retention priority of CSI not containing RSRP, and the wideband CQI is higher than the subband CQI.

In an embodiment, if the UCI carries an update request, the retention priority of the information to be carried may be determined based at least on whether the information to be carried carries the update request. For example, illustratively, the UCI carries SR, HARQ, and CSI, and the retention priority of CSI may be determined based on whether the CSI carries the update request. For example, if the CSI carries the update request, the retention priority of the CSI is higher than the retention priority of the SR and may be retained. If the CSI does not carry the update request, the retention priority of the CSI is lower than the retention priority of the SR.

In an embodiment, if the update request is carried in the CSI, the information to be carried in the UCI includes: SR, HARQ and CSI carrying the update request, and the information to be carried with a lower retention priority can be discarded according to an order of retention priority. The retention priority may be in the order from high to low as follows: HARQ, SR, CSI carrying the update request, and CSI not carrying the update request.

In an embodiment, if the update request is carried in the CSI, the information to be carried in the UCI includes: SR, HARQ and CSI carrying the update request, and the information to be carried with a lower retention priority can be discarded according to the order of retention priority. The retention priority may be in the order from high to low as follows: HARQ, CSI carrying the update request, SR, CSI not carrying the update request.

In an embodiment, the information to be carried includes an SR, where the SR carrying the update request and the SR not carrying the update request have the same retention priority; and/or
the information to be carried includes CSI, where the CSI carrying the update request has a first retention priority, the CSI carrying the Layer 1 Reference Signal Received Power (LI-PSRP) has a second retention priority, and the CSI not carrying the update request or LI-PSRP has a third retention priority, where the first retention priority is higher than the second retention priority, and the second retention priority is higher than the third retention priority; and/or
the information to be carried includes: CSI carrying the update information, where the retention priority of the CSI transmitted at a first reporting occasion is higher than the retention priority of the CSI transmitted at a second reporting occasion; where the retention priority of the CSI transmitted at the second reporting occasion is higher than the retention priority of the CSI transmitted at a third reporting occasion; where the first reporting occasion is triggered by the network side device, the second reporting occasion is a periodic reporting occasion within an active period of time activated by the network side device, and the third reporting occasion is a non-active and/or deactivated periodic occasion, where the retention priority of the CSI transmitted through a PUSCH resource is higher than the retention priority of the CSI transmitted through a PUCCH resource.

Here, if the update request is carried in the SR, that is, the update request is bound to a SR resource ID, the SR has the same retention priority as other SR(s) that does(do) not carry the update request.

If the update request is carried in the CSI as a CSI report quantity, the retention priority of the CSI may be determined based on the CSI report quantity: the retention priority of the CSI carrying the update request is greater than the retention priority of the CSI carrying the LI-PSRP, and the retention priority of the CSI carrying the LI-PSRP is greater than the CSI carrying other report quantity(quantities).

If multiple pieces of CSI all carry update requests (e.g., all carry the report quantity of update request), then the retention priority level of CSI may be determined based on the reporting occasion of CSI and the resources for carrying CSIs: the retention priority level of CSI at an aperiodic reporting occasion (i.e., a reporting occasion triggered by the network side device) is greater than the retention priority level of CSI at semi-static reporting occasion (i.e., a periodic reporting occasion during an active period of time activated by the network side device); the retention priority level of CSI at the semi-static reporting occasion (i.e., the periodic reporting occasion during the active period of time activated by the network side device) is greater than the retention priority of CSI at periodic reporting occasion. If the retention priorities of the CSI reporting occasions are the same, the retention priority of CSI transmitted through a PUSCH resource is higher than the retention priority of CSI transmitted through a PUCCH resource.

As an example, the retention priority of an aperiodic CSI carried by PUSCH > the retention priority of a semi-static CSI carried by PUSCH > the retention priority of a semi-static CSI carried by PUCCH > the retention priority of a periodic CSI carried by PUCCH.

In order to further explain any embodiment of the present disclosure, several specific embodiments are provided below.
1. Under a certain circumstance, a UE sends a CSI reporting mode update request (CSI change request) to a network side device. The update request is used to notify the network side device whether a current CSI reporting mode is appropriate.
   Here, the CSI reporting mode may include: a CSI report quantity (e.g., PMI or AI-eigenvector). The CSI reporting mode may include: a CSI report configuration (e.g., report configuration #1 or CSI report configuration #2), and/or other parameters in the CSI report configuration.
2. The update request may be sent through at least one of the following channels :
   a) PUCCH:
      Specifically, when the update request is sent individually, PUCCH format 0 or PUCCH format 1 is used.
      When the update request is multiplexed with other information in UCI (such as HARQ in UCI), PUCCH format 2 or PUCCH format 3 may be used.
   b) UCI in PUSCH.
3. The update request may be reported in at least one of the following methods :
   Method 1: the update request is reported when necessary/the update request is sent as a type of SR/the update request is sent by binding with a SR resource index. For example, a Scheduling Request is sent only in a predetermined situation (for example, positive), that is, the Scheduling Request is sent when there is a need for data scheduling. For example, the Scheduling Request is sent only when the UE finds that the CSI reporting mode needs to be switched. When a periodic PUCCH occasion configured for the CSI update request arrives, if the CSI reporting mode does not need to be switched at this time, the UE does not send an update request. The update request is sent as a Scheduling Request (SR) and is bounded with an SR resource ID (Scheduling Request Resource ID).
   a) When the update request is sent individually, taking 1-bit information as an example, sending of "1" indicates positive, that is, switching needs to occur. The PUCCH format 0 or PUCCH format 1 may be used for sending.
   b) If the update request needs to be multiplexed with other UCI and then sent, for example, PUCCH format 2 or PUCCH format 2 may be used for sending, or the update request may be sent in PUSCH. For example, there is currently HARQ-ACK information to be sent and there are three types of SR, namely scheduling request, Link Recovery Request (LRR) and an update request. In this case, 2 bits (2=log(3+1)) are needed to jointly encode multiple SRs to indicate the state of each SR, and indicate each SR in an ascending order. A "00" state indicates all negative states, that is, there is no uplink scheduling request, there is no link recovery request, and there is no CSI switching request; a "01" state indicates that there is an uplink scheduling request, there is no link recovery request, and there is no CSI switching request; a "11" state indicates that there is no uplink scheduling request, there is no link recovery request, and there is a CSI switching request. The 2-bit information is appended to the HARQ-ACK information and sent together.

Mode 2, similar to CSI reporting, the reporting is performed according to periodic/semi-static/dynamic configuration. When the reporting occasion comes, the UE needs to perform reporting regardless of whether CSI reporting needs to be switched. Taking 1-bit information as an example, when the CSI reporting mode needs to be switched, "1" is reported, and when the CSI reporting mode does not need to be switched, "0" is reported.
a) Periodic and/or semi-static and/or aperiodic reporting can be supported.

A new report quantity may be defined as an update request (CSI change request).

For example, a network side device configures a CSI report configuration, where the report quantity included in the CSI report configuration is the update request (CSI change request), and its time property is aperiodic reporting. When the network side device triggers the aperiodic reporting bounded with the CSI report configuration index, the UE reports a value corresponding to the update request (CSI change request).

4. When the update request (CSI change request) is multiplexed with other UCI for transmission, there may be a situation where resource(s) for information carried in PUCCH is not enough and a part of UCI needs to be discarded. In this case, the discard criteria/priority ranking of different UCI is as follows:
When the update request (CSI change request) is bounded with an SR resource ID (Scheduling Request Resource ID), its priority is the same as SR and does not change.

When a new report quantity is defined as the update request (CSI change request), priority ranking of different CSI report quantities is as follows:
CSI including the update request (CSI change request) > CSI including L1-RSRP > CSI including other CSI report quantities.

When CSI all includes the update request (CSI change request), aperiodic CSI carried by PUSCH > semi-static CSI carried by PUSCH > semi-static CSI carried by PUCCH > periodic CSI carried by PUCCH.

5. According to 1, the content of the update request (CSI change request) may include at least one of the following:
only inapplicability information being reported, 1 bit → can be applied to method 1 and method 12;
more information being reported, such as a recommended reporting mode, or a recommended AI model index →can be applied to method 2.

As shown in FIG. 6, an embodiment of the present disclosure provides an information transmission apparatus 100. The apparatus 100 is applied to a UE and includes:
a first transceiving module 110 configured to send an update request to a network side device, where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), and the UCI is transmitted through a Physical Uplink Control Channel (PUCCH) resource or a Physical Uplink Shared Channel (PUSCH) resource.

In an embodiment, the first transceiving module 110 is specifically configured to:
send a Scheduling Request (SR) carrying the update request.

In an embodiment, the first transceiving module 110 is specifically configured to:
send the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the apparatus 100 further includes:
a processing module 120 configured to, based on a retention priority of information to be carried in UCI, determine information to be retained and carried in the UCI, where the retention priority is at least associated with the update request.

In an embodiment, the information to be carried includes an SR, where an SR carrying the update request and an SR not carrying the update request have a same retention priority; and/or
the information to be carried includes CSI, where CSI carrying the update request has a first retention priority, CSI carrying a Layer 1 Reference Signal Received Power (LI-PSRP) has a second retention priority, and CSI not carrying the update request or LI-PSRP has a third retention priority, where the first retention priority is higher than the second retention priority, and the second retention priority is higher than the third retention priority; and/or
the information to be carried includes CSI carrying the update information, where a retention priority of CSI transmitted at a first reporting occasion is higher than a retention priority of CSI transmitted at a second reporting occasion, the retention priority of the CSI transmitted at the second reporting occasion is higher than a retention priority of CSI transmitted at a third reporting occasion, the first reporting occasion is triggered by the network side device, the second reporting occasion is a periodic reporting occasion within an active period of time activated by the network side device, and the third reporting occasion is a non-active and/or deactivated periodic occasion, and where a retention priority of CSI transmitted through a PUSCH resource is higher than a retention priority of CSI transmitted through a PUCCH resource.

In an embodiment, the update request is further used to indicate at least one of:
a CSI compression model recommended by UE;
a CSI report configuration recommended by the UE.

As shown in FIG. 7, an embodiment of the present disclosure provides an information transmission apparatus 200. The information transmission apparatus is applied in a network side device and includes:
a second transceiving module 210 configured to receive an update request from User Equipment (UE), where the update request is at least used to indicate applicability of a currently configured Channel State Information (CSI) reporting mode.

In an embodiment, the update request is used to indicate at least one of:
the currently configured CSI reporting mode being not applicable to the UE;
the currently configured CSI reporting mode being applicable to the UE.

In an embodiment, the CSI reporting mode includes at least one of:
a CSI compression model;
a CSI report configuration.

In an embodiment, the update request is carried in Uplink Control Information (UCI), and the UCI is transmitted through a Physical Uplink Control Channel (PUCCH) resource or a Physical Uplink Shared Channel (PUSCH) resource.

In an embodiment, the second transceiving module 210 is specifically configured to:
receive a Scheduling Request (SR) carrying the update request.

In an embodiment, the second transceiving module 210 is specifically configured to:
receive the update request at a reporting occasion.

In an embodiment, the reporting occasion is a periodic reporting occasion; or
the reporting occasion is triggered by the network side device; or
the reporting occasion is a periodic reporting occasion within an active period of time activated by the network side device.

In an embodiment, the update request includes a report quantity in a CSI report configuration.

In an embodiment, the update request is further used to indicate at least one of:
a CSI compression model recommended by the UE;
a CSI report configuration recommended by the UE.

It should be noted that those skilled in the art can understand that the apparatuses provided in the embodiments of the present disclosure can be implemented alone or together with some apparatuses in the embodiments of the present disclosure or some apparatuses in related art.

Regarding the apparatuses in the above embodiments, the specific manner in which each module performs operations has been described in detail in the embodiments of the method, and will not be elaborated here.

An embodiment of the present disclosure provides a communication device, including:
a processor; and
a memory configured to store instructions executable by the processor;
where the processor is configured to perform the information transmission method according to any embodiment of the present disclosure when running the executable instructions.

In an embodiment, the communication device may include but is not limited to at least one of: a UE and a network device. Here, the network device may include a core network device or an access network device, etc. Here, the access network device may include a network side device; the core network may include AMF, SMF M.

The processor may include various types of storage medium, which may be non-transitory computer storage medium that can continue to memorize information stored thereon after the user equipment is powered off.

The processor may be connected to the memory through a bus or the like, and may be configured to read the executable program stored in the memory, for example, at least one of the methods shown in FIG. 3 to FIG. 5.

An embodiment of the present disclosure further provides a computer storage medium storing a computer executable program. When the executable program is executed by a processor, the information transmission method according to any embodiment of the present disclosure is implemented, for example, at least one of the methods shown in FIG. 3 to FIG. 5.

Regarding the apparatuses or storage medium in the above embodiments, the specific manner in which each module performs the operations has been described in detail in the embodiments of the methods, and will not be elaborated here.

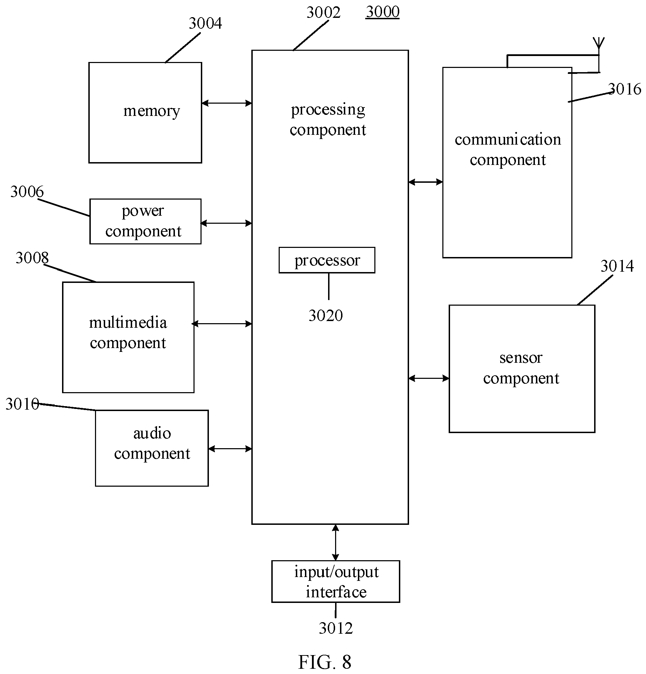

FIG. 8 is a block diagram of user equipment 3000 according to an example embodiment. For example, the user equipment 3000 may be a mobile phone, a computer, digital broadcast user equipment, a messaging device, a gaming console, a tablet, a medical device, exercise equipment, a personal digital assistant, and the like.

Referring to FIG. 8, the user equipment 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the user equipment 3000, such as the operations associated with display, telephone calls, data communications, camera operations, and recording operations. The processing component 3002 may include one or more processors 3020 to execute instructions to perform all or part of the steps in the above described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the user equipment 3000. Examples of such data include instructions for any applications or methods operated on the user equipment 3000, contact data, phonebook data, messages, pictures, video, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the user equipment 3000. The power component 3006 may include a power management system, one or more power sources, and any other components associated with the generation, management, and distribution of power in the user equipment 3000.

The multimedia component 3008 includes a screen providing an output interface between the user equipment 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3008 includes a front camera and/or a rear camera. The front camera and the rear camera may receive an external multimedia datum while the user equipment 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone ("MIC") configured to receive an external audio signal when the user equipment 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the user equipment 3000. For instance, the sensor component 3014 may detect an open/closed status of the user equipment 3000, relative positioning of components, e.g., the display and the keypad, of the user equipment 3000, a change in position of the user equipment 3000 or a component of the user equipment 3000, a presence or absence of user contact with the user equipment 3000, an orientation or an acceleration/deceleration of the user equipment 3000, and a change in temperature of the user equipment 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the user equipment 3000 and other devices. The user equipment 3000 can access a wireless network based on a communication standard, such as WiFi, 4G, or 5G, or a combination thereof. In one example embodiment, the communication component 3016 receives a broadcast signal or broadcast associated information from an external broadcast management system via a broadcast channel. In one example embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the user equipment 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 3004 including instructions executable by the processor 3020 in the user equipment 3000, for performing the above-described methods. For example, the non-transitory computer-readable storage medium may be a ROM, a Random Access Memory (RAM), a CD-ROM, a magnetic tape, a floppy disc, an optical data storage device, and the like.

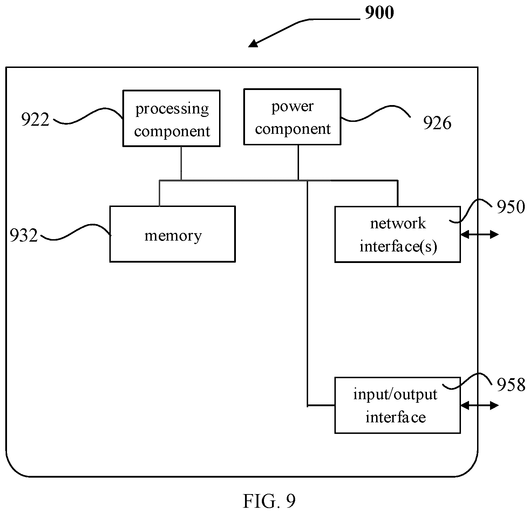

As shown in FIG. 9, an embodiment of the present disclosure shows a structure of a base station. For example, the base station 900 may be provided as a network side device. Referring to FIG. 9, the base station 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform any of the above described methods which are applied at the base station.

The base station 900 may also include a power component 926 configured to perform power management of the base station 900, wired or wireless network interface(s) 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An information transmission method, wherein the method is performed by User Equipment (UE), and the method comprises:
sending an update request to a network side device, wherein the update request is at least used to indicate applicability of a currently configured Channel State Information (CSI) reporting mode.

2. The method according to claim 1, wherein the update request is used to indicate at least one of:
the currently configured CSI reporting mode being not applicable to the UE;
the currently configured CSI reporting mode being applicable to the UE.

3. The method according to claim 1, wherein the CSI reporting mode comprises at least one of:
a CSI compression model;
a CSI report configuration.

4. The method according to claim 1, wherein the update request is carried in Uplink Control Information (UCI), and the UCI is transmitted through a Physical Uplink Control Channel (PUCCH) resource or a Physical Uplink Shared Channel (PUSCH) resource.

5. The method according to claim 1, wherein sending the update request comprises:
sending a Scheduling Request (SR) carrying the update request.

6. The method according to claim 1, wherein sending the update request comprises:
sending the update request at a reporting occasion.

7. The method according to claim 6, wherein:
the reporting occasion is a periodic reporting occasion; or
the reporting occasion is triggered by the network side device; or
the reporting occasion is a periodic reporting occasion within an active period of time activated by the network side device.

8. The method according to claim 6, wherein the update request comprises a report quantity in a CSI report configuration.

9. The method according to any one of claims 1 to 8, further comprising:
based on a retention priority of information to be carried in UCI, determining information to be retained and carried in the UCI, wherein the retention priority is at least associated with the update request.

10. The method according to claim 9, wherein:
the information to be carried comprises an SR, wherein an SR carrying the update request and an SR not carrying the update request have a same retention priority; and/or
the information to be carried comprises CSI, wherein CSI carrying the update request has a first retention priority, CSI carrying a Layer 1 Reference Signal Received Power (LI-PSRP) has a second retention priority, and CSI not carrying the update request or LI-PSRP has a third retention priority, wherein the first retention priority is higher than the second retention priority, and the second retention priority is higher than the third retention priority; and/or
the information to be carried comprises CSI carrying the update information, wherein a retention priority of CSI transmitted at a first reporting occasion is higher than a retention priority of CSI transmitted at a second reporting occasion, the retention priority of the CSI transmitted at the second reporting occasion is higher than a retention priority of CSI transmitted at a third reporting occasion, the first reporting occasion is triggered by the network side device, the second reporting occasion is a periodic reporting occasion within an active period of time activated by the network side device, and the third reporting occasion is a non-active and/or deactivated periodic occasion, and wherein a retention priority of CSI transmitted through a PUSCH resource is higher than a retention priority of CSI transmitted through a PUCCH resource.

11. The method according to any one of claims 1 to 8, wherein the update request is further used to indicate at least one of:
a CSI compression model recommended by the UE;
a CSI report configuration recommended by the UE.

12. An information transmission method, wherein the method is performed by a network side device, and the method comprises:
receiving an update request from User Equipment (UE), wherein the update request is at least used to indicate applicability of a currently configured Channel State Information (CSI) reporting mode.

13. The method according to claim 12, wherein the update request is used to indicate at least one of:
the currently configured CSI reporting mode being not applicable to the UE;
the currently configured CSI reporting mode being applicable to the UE.

14. The method according to claim 12, wherein the CSI reporting mode comprises at least one of:
a CSI compression model;
a CSI report configuration.

15. The method according to claim 12, wherein the update request is carried in Uplink Control Information (UCI), and the UCI is transmitted through a Physical Uplink Control Channel (PUCCH) resource or a Physical Uplink Shared Channel (PUSCH) resource.

16. The method according to claim 12, wherein receiving the update request from the UE comprises:
receiving a Scheduling Request (SR) carrying the update request.

17. The method according to claim 12, wherein receiving the update request from the UE comprises:
receiving the update request at a reporting occasion.

18. The method according to claim 17, wherein:
the reporting occasion is a periodic reporting occasion; or
the reporting occasion is triggered by the network side device; or
the reporting occasion is a periodic reporting occasion within an active period of time activated by the network side device.

19. The method according to claim 17, wherein the update request comprises a report quantity in a CSI report configuration.

20. The method according to any one of claims 12 to 19, wherein the update request is further used to indicate at least one of:
a CSI compression model recommended by the UE;
a CSI report configuration recommended by the UE.

21. An information transmission apparatus, comprising:
a first transceiving module configured to send an update request to a network side device, wherein the update request is at least used to indicate applicability of a currently configured Channel State Information (CSI) reporting mode.

22. The apparatus according to claim 21, wherein the update request is used to indicate at least one of:
the currently configured CSI reporting mode being not applicable to the UE;
the currently configured CSI reporting mode being applicable to the UE.

23. The apparatus according to claim 21, wherein the CSI reporting mode comprises at least one of:
a CSI compression model;
a CSI report configuration.

24. The apparatus according to claim 21, wherein the update request is carried in Uplink Control Information (UCI), and the UCI is transmitted through a Physical Uplink Control Channel (PUCCH) resource or a Physical Uplink Shared Channel (PUSCH) resource.

25. The apparatus according to claim 21, wherein the first transceiving module is specifically configured to:
send a Scheduling Request (SR) carrying the update request.

26. The apparatus according to claim 21, wherein the first transceiving module is specifically configured to:
send the update request at a reporting occasion.

27. The apparatus according to claim 26, wherein:
the reporting occasion is a periodic reporting occasion; or
the reporting occasion is triggered by the network side device; or
the reporting occasion is a periodic reporting occasion within an active period of time activated by the network side device.

28. The apparatus according to claim 26, wherein the update request comprises a report quantity in a CSI report configuration.

29. The apparatus according to any one of claims 21 to 28, wherein the apparatus further comprises:
a processing module configured to, based on a retention priority of information to be carried in UCI, determine information to be retained and carried in the UCI, wherein the retention priority is at least associated with the update request.

30. The apparatus according to claim 29, wherein:
the information to be carried comprises an SR, wherein an SR carrying the update request and an SR not carrying the update request have a same retention priority; and/or
the information to be carried comprises CSI, wherein CSI carrying the update request has a first retention priority, CSI carrying a Layer 1 Reference Signal Received Power (LI-PSRP) has a second retention priority, and CSI not carrying the update request or LI-PSRP has a third retention priority, wherein the first retention priority is higher than the second retention priority, and the second retention priority is higher than the third retention priority; and/or
the information to be carried comprises CSI carrying the update information, wherein a retention priority of CSI transmitted at a first reporting occasion is higher than a retention priority of CSI transmitted at a second reporting occasion, the retention priority of the CSI transmitted at the second reporting occasion is higher than a retention priority of CSI transmitted at a third reporting occasion, the first reporting occasion is triggered by the network side device, the second reporting occasion is a periodic reporting occasion within an active period of time activated by the network side device, and the third reporting occasion is a non-active and/or deactivated periodic occasion, and wherein a retention priority of CSI transmitted through a PUSCH resource is higher than a retention priority of CSI transmitted through a PUCCH resource.

31. The apparatus according to any one of claims 21 to 28, wherein the update request is further used to indicate at least one of:
a CSI compression model recommended by UE;
a CSI report configuration recommended by the UE.

32. An information transmission apparatus, comprising:
a second transceiving module configured to receive an update request from User Equipment (UE), wherein the update request is at least used to indicate applicability of a currently configured Channel State Information (CSI) reporting mode.

33. The apparatus according to claim 32, wherein the update request is used to indicate at least one of:
the currently configured CSI reporting mode being not applicable to the UE;
the currently configured CSI reporting mode being applicable to the UE.

34. The apparatus according to claim 32, wherein the CSI reporting mode comprises at least one of:
a CSI compression model;
a CSI report configuration.

35. The apparatus according to claim 32, wherein the update request is carried in Uplink Control Information (UCI), and the UCI is transmitted through a Physical Uplink Control Channel (PUCCH) resource or a Physical Uplink Shared Channel (PUSCH) resource.

36. The apparatus according to claim 32, wherein the second transceiving module is specifically configured to:
receive a Scheduling Request (SR) carrying the update request.

37. The apparatus according to claim 32, wherein the second transceiving module is specifically configured to:
receive the update request at a reporting occasion.

38. The apparatus according to claim 37, wherein
the reporting occasion is a periodic reporting occasion; or
the reporting occasion is triggered by the network side device; or
the reporting occasion is a periodic reporting occasion within an active period of time activated by the network side device.

39. The apparatus according to claim 37, wherein the update request comprises a report quantity in a CSI report configuration.

40. The apparatus according to any one of claims 32 to 39, wherein the update request is further used to indicate at least one of:
a CSI compression model recommended by the UE;
a CSI report configuration recommended by the UE.

41. A communication device, comprising:
a processor;
a memory configured to store instructions executable by the processor;
wherein the processor is configured to implement the information transmission method according to any one of claims 1 to 11 and 12 to 20 when running the executable instructions.

42. A computer storage medium, wherein the computer storage medium stores a computer executable program, and when the executable program is executed by a processor, the information transmission method according to any one of claims 1 to 11 and 12 to 20 is implemented.
